(19) Europäisches Patentamt
European Patent Office
Office européen des brevets

(11) Publication number: **0 323 728 B1**

# (12) EUROPEAN PATENT SPECIFICATION

(45) Date of publication of patent specification: **13.10.93**

(51) Int. Cl.$^5$: **C09B 23/10**, G03C 1/815

(21) Application number: **88312053.7**

(22) Date of filing: **20.12.88**

## (54) Filter dyes for photographic elements.

(30) Priority: **23.12.87 US 137491**

(43) Date of publication of application:
**12.07.89 Bulletin 89/28**

(45) Publication of the grant of the patent:
**13.10.93 Bulletin 93/41**

(84) Designated Contracting States:
**AT BE CH DE ES FR GB IT LI NL SE**

(56) References cited:
**FR-E- 49 384**

(73) Proprietor: **EASTMAN KODAK COMPANY (a New Jersey corporation)**
**343 State Street**
**Rochester New York 14650(US)**

(72) Inventor: **Factor, Ronda Ellen c/o Eastman Kodak Company**
**Patent Department**
**343 State Street**
**Rochester New York 14650(US)**
Inventor: **Diehl, Donald Richard c/o Eastman Kodak Company**
**Patent Department**
**343 State Street**
**Rochester New York 14650(US)**

(74) Representative: **Baron, Paul Alexander Clifford et al**
**Kodak Limited**
**Patent Department**
**Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 323 728 B1

## Description

This invention relates to dyes, particularly dyes useful as filter dyes, especially in photographic elements.

Photographic materials often contain filter dyes to absorb light from different regions of the spectrum, such as red, blue, green, ultraviolet, and infrared, to name a few. These filter dyes are often required to perform the function of absorbing light during exposure of the material so as to prevent or at least inhibit light of a region of the spectrum from reaching at least one of the radiation-sensitive layers of the element.

FR-E-49384 discloses the photographic use of dyes comprising a heterocyclic nucleus linked by an even-numbered methine chain to a non-cyclic ketomethylene compound such as benzoylacetonitrile.

After processing of the element, however, the continued presence of the filter dye will adversely affect the image quality of the photographic material. It is therefore desirable to use filter dyes that will be solubilized and removed or at least decolorized during photographic processing. Dyes that are easily solubilized, however, tend to wander throughout the photographic material during coating, adversely affecting the final image quality.

To prevent dye wandering, the dyes are often coated with a mordant to bind the dye in the layer in which it is coated. Dye mordants, while often useful, tend to either bind the dye too strongly, inhibiting solubilization of the dye during photographic processing, or too weakly, thus not preventing dye wandering. Another way to prevent dye wandering is to choose a dye that is insoluble at coating pH's and soluble and decolorizable at processing pH's. Such dyes have been incorporated in the hydrophilic layers of photographic elements dispersed with the aid of high-boiling organic solvents or precipitated in gelatin (usually with a pH shift from basic to acidic) under uncontrolled conditions. Both these techniques can lead to large particle sizes and poor performance and light absorption characteristics.

It would therefore be highly desirable to provide a filter dye for use in photographic elements that does not wander during coating, is fully solubilized during processing, and does not require a mordant.

According to the invention, there is provided a dye of the formula:

(I) 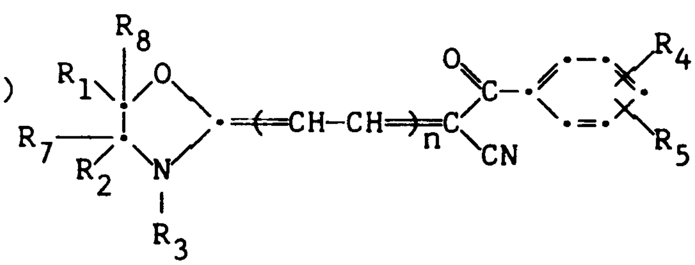 ,

wherein

$R_1$ and $R_2$ are each independently substituted or unsubstituted alkyl or substituted or unsubstituted aryl, or together represent the atoms necessary to complete a substituted or unsubstituted 5- or 6-membered ring,

$R_3$ is substituted or unsubstituted alkyl or aryl,

$R_4$ and $R_5$ each independently represents H, substituted or unsubstituted alkyl, substituted or unsubstituted aryl, $CO_2H$, or $NHSO_2R_6$, with the proviso that at least one of $R_4$, $R_5$, or a substituent on an aryl $R_3$, on an aryl $R_1$ or $R_2$, or on an aryl ring formed by $R_1$ and $R_2$ is $CO_2H$ or $NHSO_2R_6$,

$R_6$ is substituted or unsubstituted alkyl or substituted or unsubstituted aryl,

$R_7$ is substituted or unsubstituted alkyl, or together with $R_8$ forms a double bond,

$R_8$ is H or together with $R_7$ forms a double bond, and

n is 1 or 2.

The dyes of formula (I) are useful as general purpose filter dyes, especially as yellow trimmer dyes, alone or in combination with other filter dyes in photographic elements. They are insoluble at coating pH's of 6 or less (generally 4 to 6) and soluble at processing pH's of 8 or more (generally 8 to 12), so that they do not interact with other components of the photographic element, yet still are fully solubilized during photographic processing. The dyes can be prepared and incorporated in layers of photographic elements as solid particle dispersions, allowing them to effectively absorb light while maintaining the above solubility and non-wandering advantages.

According to formula (I), $R_1$, $R_2$, $R_3$, $R_4$, $R_5$, and $R_6$ may each be substituted or unsubstituted alkyl or substituted or unsubstituted aryl, preferably substituted or unsubstituted alkyl of 1 to 6 carbon atoms or

substituted or unsubstituted aryl of 6 to 12 carbon atoms. $R_7$ may be substituted or unsubstituted alkyl of from 1 to 6 carbon atoms. The alkyl or aryl groups may be substituted with any of a number of substituents as is known in the art, other than those, such as sulfo substituents, that would tend to increase the solubility of the dye so much as to cause it to become soluble at coating pH's. Examples of useful substituents include halogen, alkoxy, ester groups, amido, acyl, and alkylamino. Examples of alkyl groups include methyl, ethyl, n-propyl, isopropyl, n-butyl, isobutyl, n-pentyl, n-hexyl, or isohexyl. Examples of aryl groups include Phenyl, naphthyl, anthracenyl, etc.

$R_1$ and $R_2$ may also together represent the atoms necessary to complete a substituted or unsubstituted 5- or 6-membered ring, such as phenyl, naphthyl, pyridyl, cyclohexyl, dihydronaphthyl, or acenaphthyl. This ring may be substituted with substituents, other than those, such as sulfo substituents, that would tend to increase the solubility of the dye so much as to cause it to become soluble at coating pH's. Examples of useful substituents include halogen, alkyl, alkoxy, ester, amido, acyl, and alkylamino.

Examples of dyes according to formula (I) include the following:

1

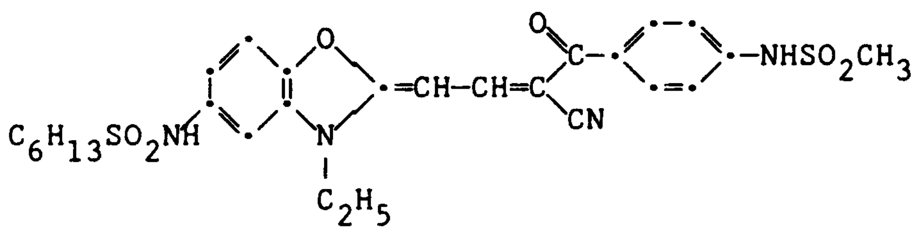

2

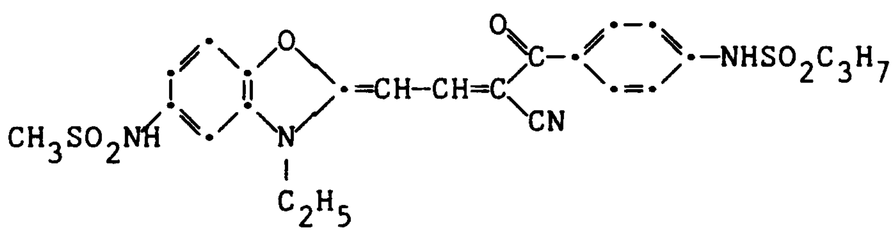

3

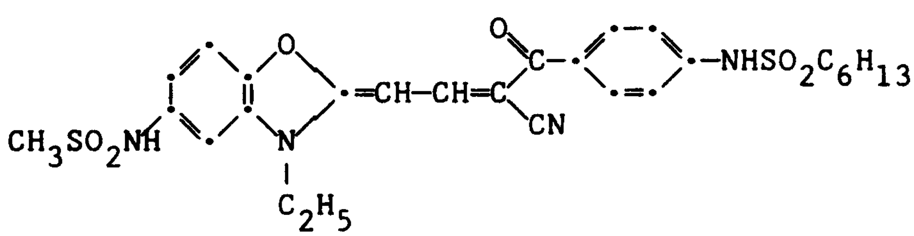

4

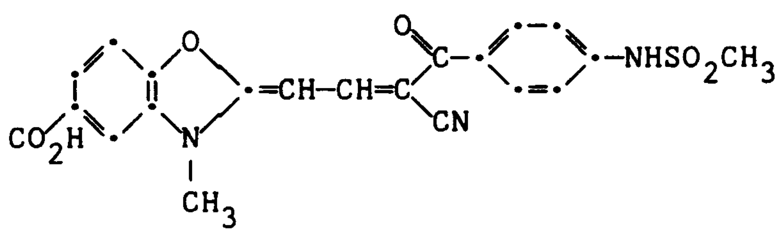

5

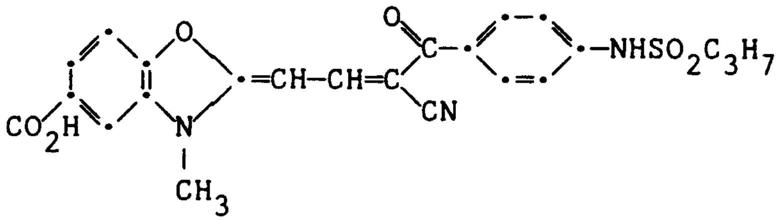

7

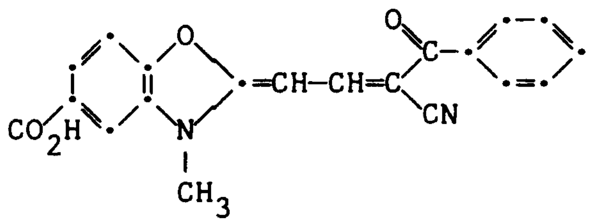

8

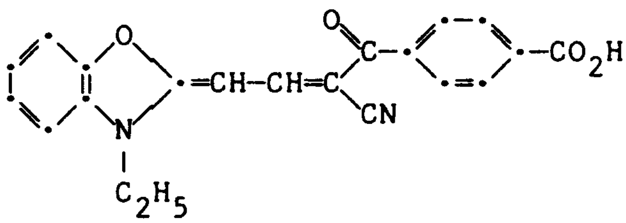

9

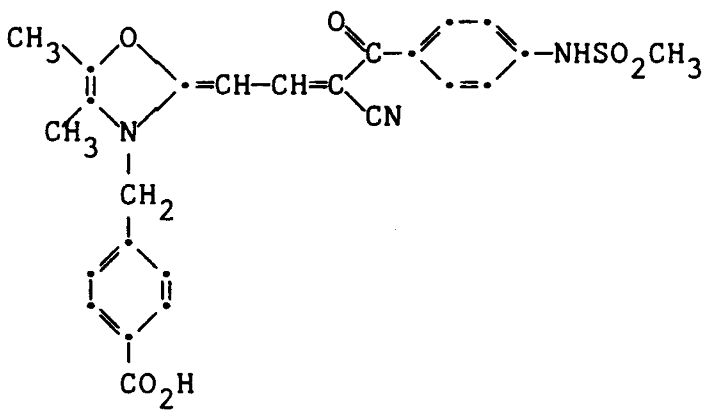

10

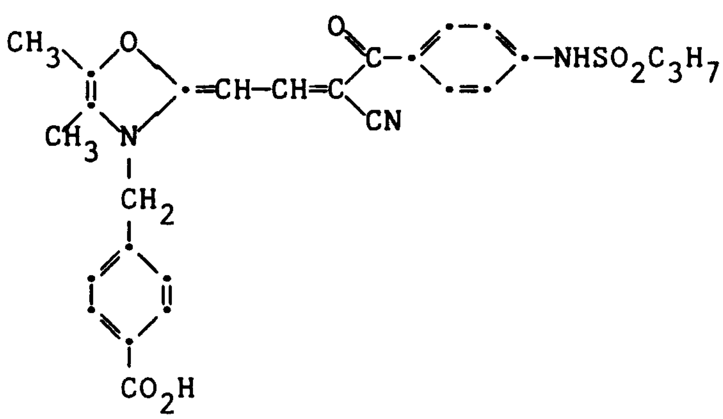

11

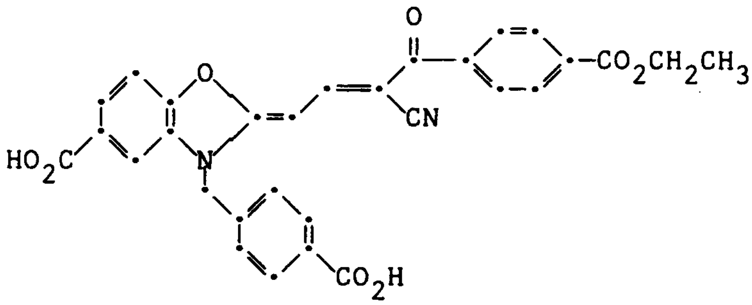

12

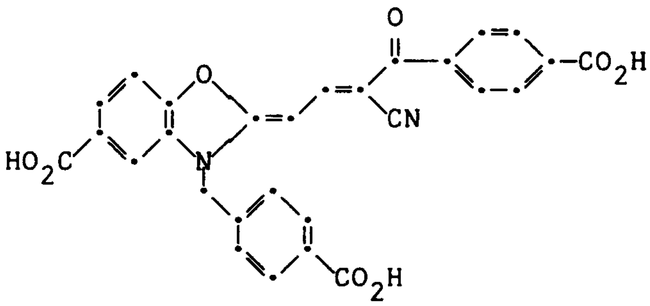

13

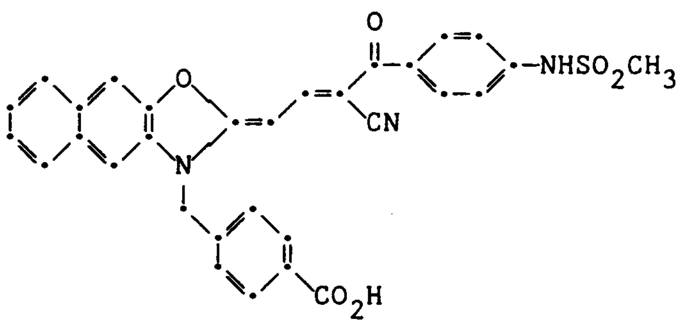

14

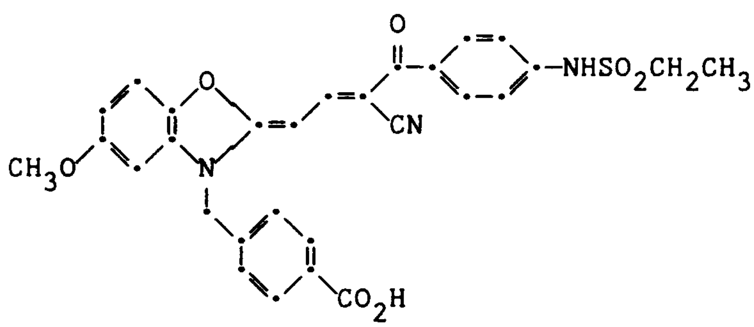

15

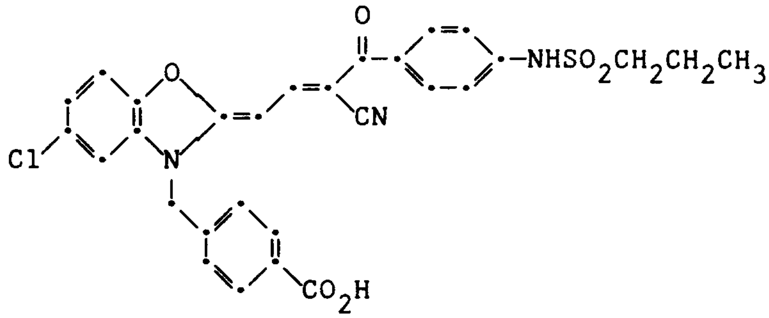

16

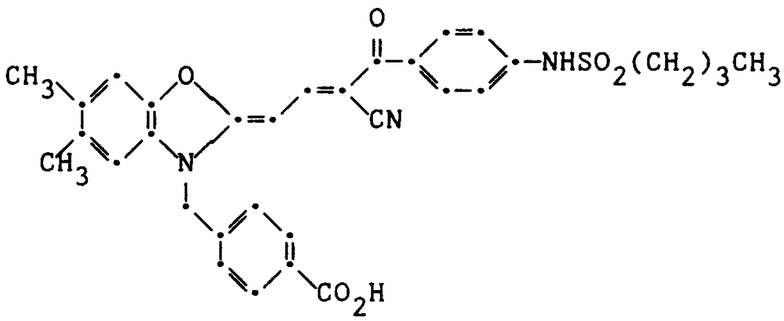

17

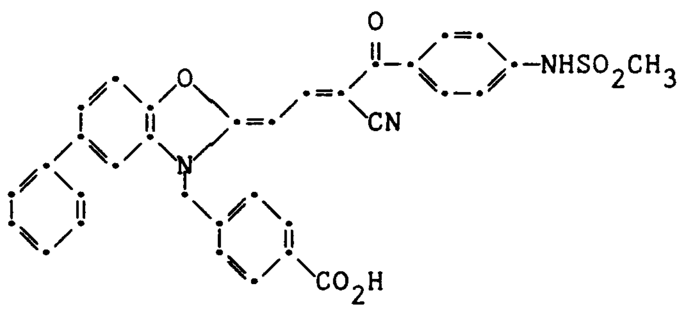

18

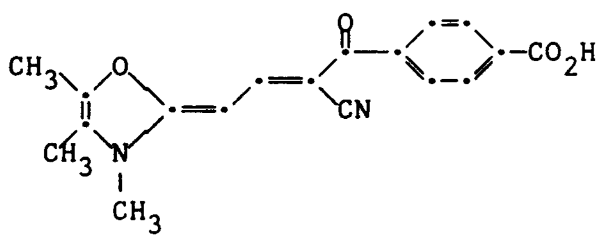

19

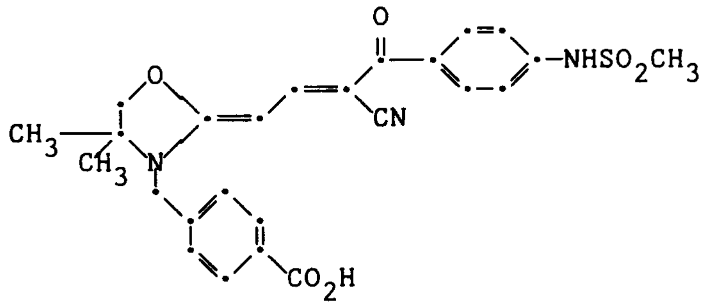

20

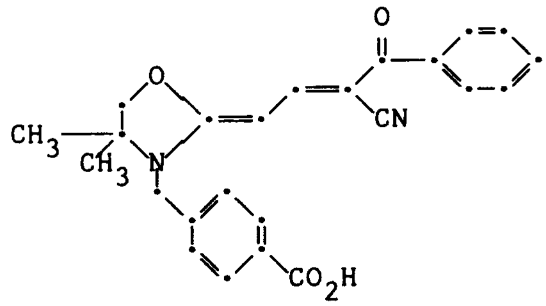

21

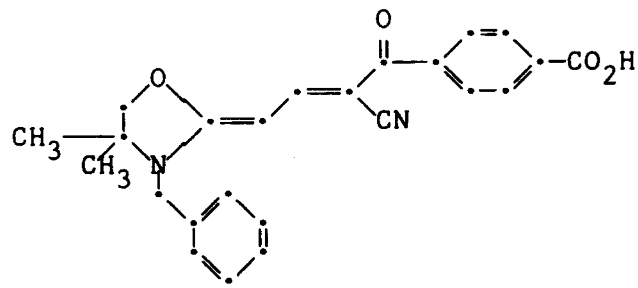

22

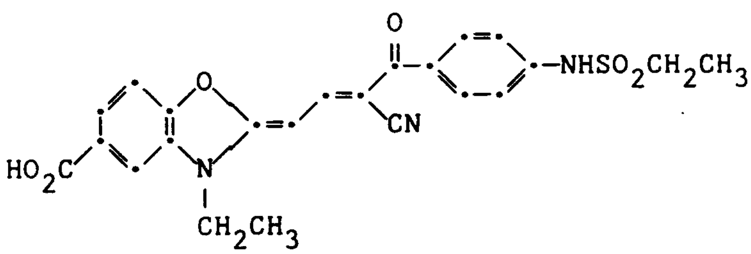

23

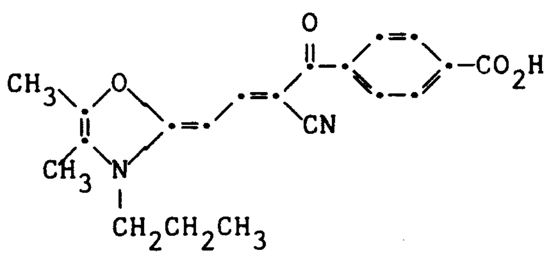

24

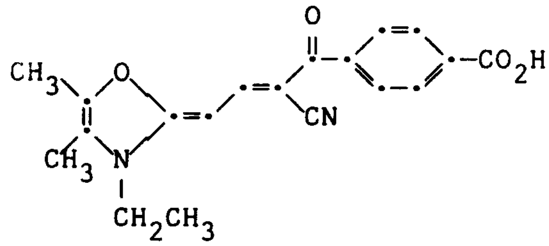

25

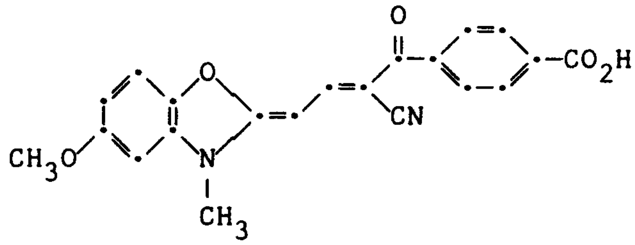

26

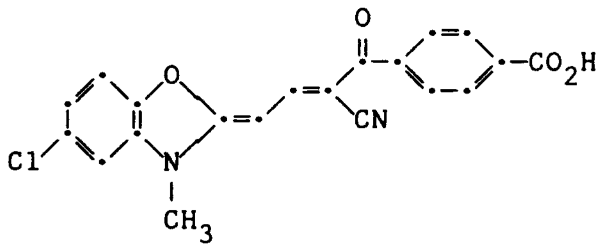

27

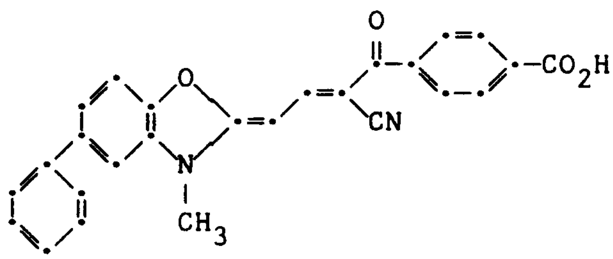

28

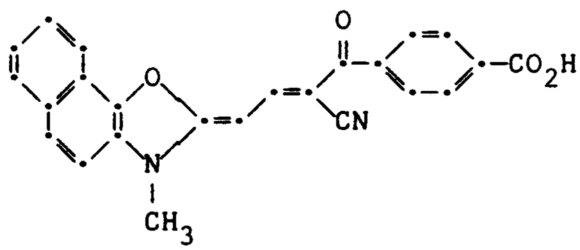

29

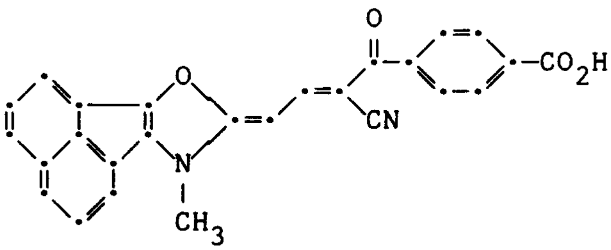

30

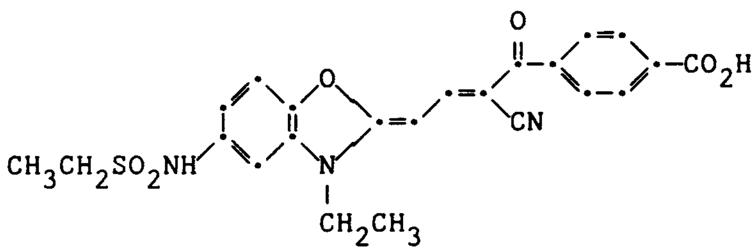

31

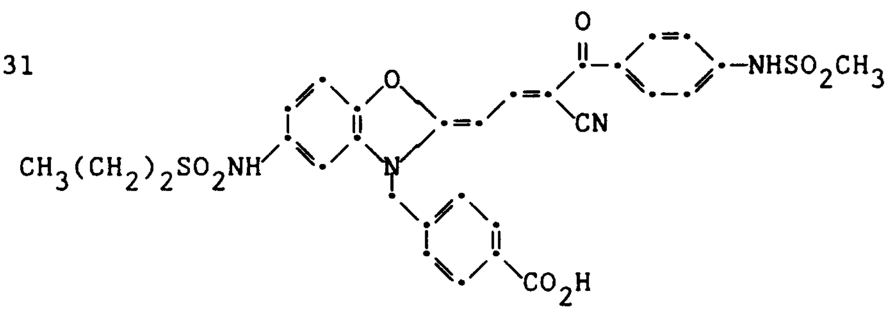

32

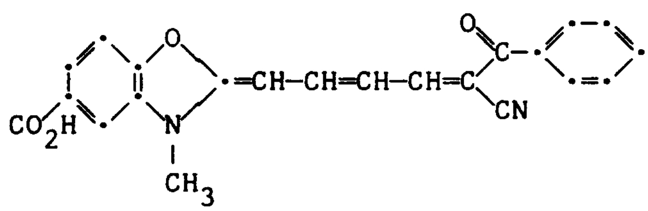

33

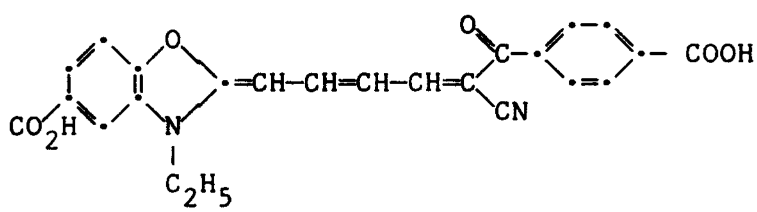

34

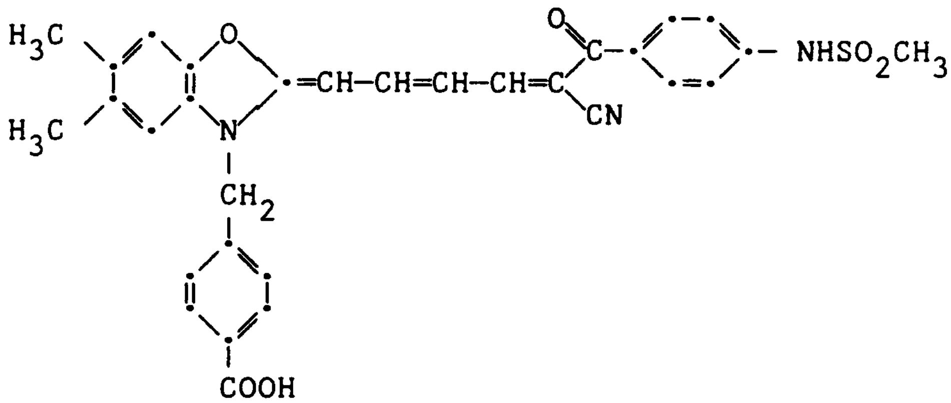

35

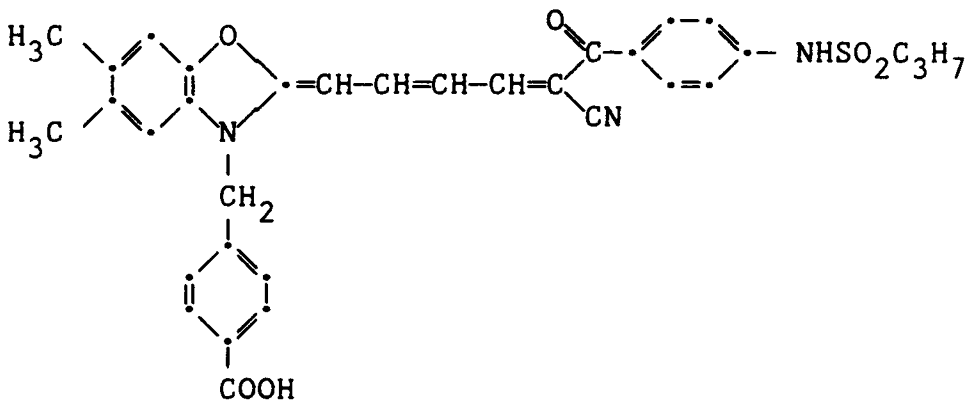

The dyes of formula (I) can be prepared by synthetic techniques well known in the art, as illustrated by the synthetic examples below. Such techniques are further illustrated, for example, in "The Cyanine Dyes and Related Compounds", Frances Hamer, Interscience Publishers, 1964.

The dyes may be located in any layer of the element where it is desirable to absorb light, but it is particularly advantageous to locate them in a layer where they will be solubilized and washed out during processing. Useful amounts of dye range from 1 to 1000 mg/ft$^2$. The dye should be present in an amount sufficient to yield an optical density at the transmission D-max in the visible region before processing of at least 0.10 density units and preferably at least 0.50 density units. This optical density will generally be less than 5.0 density units for most photographic applications.

The dye of formula (I) is preferably incorporated in a photographic element in the form of a solid particle dispersion of particles dispersed in a hydrophilic colloid medium, such as gelatin. However, the dye can also be incorporated in hydrophilic layers of photographic elements using other techniques, such as dispersed in a high-boiling water-insoluble solvent such as dibutyl phthalate or tricresyl phosphate or loaded in a polymeric latex as described in Research Disclosure, Item 19551, July, 1980.

The solid particle dispersion can be formed by precipitating or reprecipitating (e.g., by solvent or pH shift) the dye in the form of a dispersion under controlled conditions so that the particle size requirements described below are satisfied and/or by well-known milling techniques, e.g., ball-milling, sand-milling, or colloid-milling the dye in the presence of a dispersing agent. By solid particle dispersion, it is meant that the dye particles in the dispersion are of microscopic size, preferably having a mean diameter of less than 10 µm and preferably less than 1 µm. The dye particles can generally be prepared in sizes ranging down to 0.01 µm. Although particle sizes below 0.01 µm will not adversely affect performance of the solid particle dispersion, the difficulty, time, and expense required to prepare such small particles can sometimes be prohibitive.

The support of a photographic element can be any of a number of well-known supports for photographic elements. These include polymeric films such as cellulose esters (e.g., cellulose triacetate and diacetate) and polyesters of dibasic aromatic carboxylic acids with divalent alcohols (e.g., poly(ethylene terephthalate)), paper, and polymer-coated paper. Such supports are described in further detail in Research Disclosure, December, 1978, Item 17643 [hereinafter referred to as Research Disclosure], Section XVII.

The radiation-sensitive layer of a photographic element can contain any of the known radiation-sensitive materials, such as silver halide, diazo image-forming systems, light-sensitive tellurium-containing compounds, light-sensitive cobalt-containing compounds, and others described in, for example, J. Kosar, Light-Sensitive Systems: Chemistry and Application of Nonsilver Halide Photographic Processes, J. Wiley & Sons, N.Y. (1965). Radiation-sensitive materials exhibiting sensitivity to blue light and especially those sensitive to blue light and at least some other wavelength of radiation are preferred, as the dyes according to formula (I) can be advantageously used to absorb some or all of the blue light.

Silver halide is especially preferred as a radiation-sensitive material. Silver halide emulsions can contain, for example, silver bromide, silver chloride, silver iodide, silver chlorobromide, silver chloroiodide, silver bromoiodide, or mixtures thereof. The emulsions can include coarse, medium, or fine silver halide grains bounded by 100, 111, or 110 crystal planes. Silver halide emulsions and their preparation are further described in Research Disclosure, Section I. Also useful are tabular grain silver halide emulsions, as described in Research Disclosure, January, 1983, Item 22534 and U.S. Patent 4,425,426.

The radiation-sensitive materials described above can be sensitized to a particular wavelength range of radiation, such as the red, blue, or green portions of the visible spectrum, or to other wavelength ranges, such as ultraviolet, infrared, X-ray, and the like. Sensitization of silver halide can be accomplished with chemical sensitizers such as gold compounds, iridium compounds, or other group VIII metal compounds, or with spectral sensitizing dyes such as cyanine dyes, merocyanine dyes, styryls, or other known spectral sensitizers. Additional information on sensitization of silver halide is described in Research Disclosure, Sections I-IV.

The dyes of formula (I) tend to absorb light in the blue portion of the spectrum, and are thus useful in many applications requiring the use of a blue-absorbing filter dyes. For example, they can be used as interlayer dyes, trimmer dyes, or antihalation dyes. They can be used to prevent crossover in X-ray materials, to prevent unwanted blue light from reaching the green-sensitive emulsion layer of a multicolor photographic element, and other uses as indicated by the absorbance spectrum of the particular dye. The dyes can be used in a separate filter layer or as an intergrain absorber.

Multicolor photographic elements generally comprise a blue-sensitive silver halide layer having a yellow color-forming coupler associated therewith, a green-sensitive layer having a magenta color-forming coupler associated therewith, and a red-sensitive silver halide layer having a cyan color-forming coupler associated therewith. Color photographic elements and color-forming couplers are well-known in the art and are further described in Research Disclosure, Section VII.

The photographic elements can also include any of a number of other well-known additives and layers, as described in Research Disclosure. These include, for example, optical brighteners, antifoggants, image stabilizers, light-absorbing materials such as filter layers or intergrain absorbers, light-scattering materials, gelatin hardeners, coating aids and various surfactants, overcoat layers, interlayers and barrier layers, antistatic layers, plasticizers and lubricants, matting agents, development inhibitor-releasing couplers, bleach accelerator-releasing couplers, and other additives and layers known in the art.

The dye of formula (I) can be located in any layer of a photographic element where it is desired to absorb light. In a preferred embodiment, the dye is preferably located in a layer where it will be subjected to high pH (i.e., 8 to 12) and/or sulfite during photographic processing, so as to allow the dye to be solubilized and removed or decolorized .

The photographic elements, when exposed, can be processed to yield an image. During processing, the dye of formula (I) will generally be decolorized and/or removed. Following processing, the dye of formula (I) should contribute less than 0.10 density unit, and preferably less than 0.02 density unit to the transmission D-max in the visible region in the minimum density areas of the exposed and processed element.

Processing can be by any type of known photographic processing, as described in Research Disclosure, Sections XIX-XXIV, although it preferably includes a high pH (i.e., 8 or above) step utilizing an aqueous sulfite solution in order to maximize decolorization and removal of the dye. A negative image can be developed by color development with a chromogenic developing agent followed by bleaching and fixing. A positive image can be developed by first developing with a non-chromogenic developer, then uniformly fogging the element, and then developing with a chromogenic developer. If the material does not contain a color-forming coupler compound, dye images can be produced by incorporating a coupler in the developer solutions.

Bleaching and fixing can be performed with any of the materials known to be used for that purpose. Bleach baths generally comprise an aqueous solution of an oxidizing agent such as water soluble salts and complexes of iron (III) (e.g., potassium ferricyanide, ferric chloride, ammonium of potassium salts of ferric ethylenediaminetetraacetic acid), water-soluble persulfates (e.g., potassium, sodium, or ammonium persulfate), water-soluble dichromates (e.g., potassium, sodium, and lithium dichromate), and the like. Fixing baths generally comprise an aqueous solution of compounds that form soluble salts with silver ions, such as sodium thiosulfate, ammonium thiosulfate, potassium thiocyanate, sodium thiocyanate, thiourea, and the

like.

The invention is further illustrated by the following Examples:

Example 1 - Dye 1

Step 1 - Preparation of Intermediate A

To a solution of 29.6 g of 5-amino-2 methylbenzoxazole in 100 ml pyridine cooled to 0°C was added 41.3 g hexanesulfonyl chloride. After 1 hour stirring at 0°C, a reddish precipitate formed. The reaction mixture was stirred at room temperature for 2 days and then poured into 1.4 l of water and stirred for 2 hours. A heavy oil deposited and the supernatant was decanted. The oil was dissolved in 1.0 l dichloromethane, which was extracted with 4 x 200 ml of 1N hydrochloric acid, then dried over magnesium sulfate. The solvent was removed, leaving a reddish brown liquid of 5-hexylsulfonamido-2 methylbenzoxazole (Intermediate A).

Step 2 - Preparation of Intermediate B

A mixture of 60 g of Intermediate A and 44 g ethyl p-toluenesulfonate was heated in a round bottom flask at 150°C for 5 minutes. Upon cooling to room temperature, the crude brown mass was almost solidified. The product was dissolved in 25 ml methanol and poured into 300 ml diethyl ether with rapid stirring for 1 hour. The solid precipitate was chilled at 2°C overnight, and then filtered. The tan powder was thoroughly washed with ether and recrystallized from 200 ml hot isopropyl alcohol to yield 23.4 g of 3-ethyl-5-hexylsulfonamido-2-methylbenzoxazolium p-toluenesulfonate (Intermediate B).

Step 3 - Preparation of Intermediate C

A combination of 10 g Intermediate B and 8 g N,N-diphenylformamidine was thoroughly mixed and heated with stirring at 150-160°C for 25 minutes. The flask was then fitted with a condenser and 50 ml hot acetone was cautiously added. An orange precipitate formed. The flask was removed from the heat, cooled, and chilled in ice. After 1 hour, the reddish precipitate was filtered off and discarded. The filtrate was poured into 300 ml diethyl ether and stirred for 2 hours. The resulting yellow-orange powder was filtered, washed with ether, and dried to yield 10.6 g of 2-(2-anilinovinyl)-3-ethyl-5-hexyl-sulfonamidobenzoxazolium p-toluenesulfonate (Intermediate C).

Step 4 - Preparation of Dye 1

A mixture of 2.7 g of Intermediate C, 15 ml ethanol, 0.54 g acetic anhydride, and 0.7 ml triethylamine was heated at reflux for 1 minute. Then 1.2 g 4-methylsulfonamidobenzoylacetonitrile (prepared according the procedure disclosed in Kreuger et al U.S. Patent 4,420,555) and 0.8 ml triethylamine were added and the mixture was heated at reflux for 2 minutes. The mixture was then chilled in ice for 30 minutes. The yellow-orange precipitate that had formed was filtered, washed with isopropyl alcohol and diethyl ether, then air dried to yield 1.17 g of crude dye. The reaction was repeated twice more to obtain a total of 3.0 g of crude dye, which was dissolved in 250 ml hot acetone, which was stirred with 10 g Amberlyst-15® ion exchange resin for 3 hours, heated for 15 minutes to reflux, then filtered while hot. The filtrate was chilled to 2°C overnight and the resulting yellow precipitate was air dried to yield 2.3 g of Dye 1. The dye had a melting point of 297-298°C, λ-max = 42 nm (methanol), $\epsilon$ = $7.32 \times 10^4$.

Example 2-Dye 4

Step 1 - Preparation of Intermediate D

To a slurry of 4-methylsulfonamidobenzoylacetonitrile (7.0 g) in acetonitrile (70 ml), diethoxymethylacetate (16.2 g) was added and the mixture heated at reflux for 30 minutes. The mixture was cooled to room temperature and filtered. The filtrate was poured into 600 ml diethyl ether, after which 800 ml ligroin P950 was added with rapid stirring. A light yellow oil formed in droplets, which spontaneously crystallized. The crystalline product was collected by filtration, washed with ligroin P950, and dried to yield 7.1 g of 2-(ethoxymethylidene)-2-(4′-methylsulfonamidobenzoyl)-acetonitrile.

Step 2 - Preparation of Intermediate E

5-Carboxy-2-methylbenzoxazole (8.9 g) and methyl-p-toluenesulfonate (11.16 g) were combined and heated to 200 °C with stirring for 10 minutes. The mixture became a brown liquid and mild boiling occured. The reaction was cooled to room temperature and the liquid solidified. Acetone (50 ml) was added, and with constant heating at reflux, the product was broken up with a spatula. The resulting slurry was heated at reflux for 15 minutes with rapid stirring and the off-white product was collected by filtration. This product was slurried again in refluxing acetone for 30 minutes, filtered, washed with ligroin P950, and dried to yield 9.3 g of 5-carboxy-2,3-dimethylbenzoxazolium p-toluene-sulfonate (Intermediate D).

Step 3 - Preparation of Dye 4

To a slurry of Intermediate D (2.9 g) and Intermediate E (3.63 g) in ethanol (30 ml), 2.2 g triethylamine was added. The mixture was heated to reflux, held at reflux for 15 minutes, and then cooled to room temperature. The resulting solid was collected by filtration and washed with 25 ml ethanol. The solid was then slurried in 500 ml acetic acid at reflux for 30 minutes, chilled in ice to room temperature, and filtered. This solid was washed with 100 ml diethyl ether and dried to yield Dye 4. The dye had a melting point of greater than 310 °C, a λ-max of 436 nm (methanol), and a ε-max of 4.21 x $10^4$. Elemental analysis indicated the following content: C = 57.4%, H = 3.9%, N = 9.6%, S = 7.3%.

Example 3 - Dye 9

Step 1 - Intermediate F

2,4,5 Trimethyloxazole (11.66 g), α-bromo-p-toluic acid (21.5 g), and dry acetonitrile (100 ml) were combined and refluxed for 14 hours under nitrogen with constant stirring. Upon cooling to room temperature, the reaction mixture solidified. The solid was diluted with 100 ml acetone and filtered. The collected solid was slurried in 400 ml refluxing acetone for 20 minutes and filtered while hot. The collected solid was again slurried in 400 ml refluxing acetone and filtered while hot. This solid was washed with 100 ml acetone, then 100 ml ligroin P950 and dried to yield 21.6 g 3-(4-carboxybenzyl)-2,4,5-trimethyl-oxazolium bromide (Intermediate F).

Step 2 - Preparation of Dye 9

Intermediate F (3.26 g), Intermediate D from Example 2 (2.94 g), ethanol (30 ml), and triethylamine (2.2 g) were combined in that order. The mixture was brought to reflux with constant stirring and held at reflux for 45 minutes. After this time, the mixture had solidified to a bright yellow mass. This solid was removed from the heat, diluted with 60 ml ethanol, filtered, and the collected product was washed with 50 ml diethyl ether. The solid was then slurried in 300 ml acetic acid at reflux for 30 minutes, cooled to room temperature, and filtered. The resulting solid was washed with 300 ml diethyl ether, then 100 ml ligroin P950, and dried. This solid was dissolved in 30 ml dimethylsulfoxide at 60 °C, cooled to 50 °C, and combined with 60 ml methanol with stirring. After 1 minute, a solid had precipitated. The mixture was stirred at room temperature for 30 minutes and the solid was collected by filtration, washed with 50 ml methanol, and dried to yield 2.7 g of Dye 9. λ-max = 433 nm (methanol), ε-max = 5.68 x $10^4$, elemental analysis: C = 60.4%, H = 4.7%, N = 8.3%, S = 6.3%.

Examples 4-13 - Dye Wandering and Solubilization

Dyes 1-10 were prepared as solid particle dispersions by ball-milling according to the following procedure. Water (21.7 ml) and a 6.7% solution of Triton X-200® surfactant (2.65 g) were placed in a 60 ml screw-capped bottle. A 1.00 g sample of dye was added to this solution. Zirconium oxide beads (40 ml, 2 mm diameter) were added and the container with the cap tightly secured was placed in a mill and the contents milled for four days. The container was removed and the contents added to a 12.5% aqueous gelatin (8.0 g) solution. The new mixture was placed on a roller mill for 10 minutes to reduce foaming and the resulting mixture was filtered to remove the zirconium oxide beads

These solid particle dispersions of dyes 1-10 were coated on polyester supports according to the following procedure. A spreading agent (surfactant 10G®) and a hardener (bis(vinylsulfonylmethyl) ether) were added to the dye-gelatin melt prepared as described above. A melt from this mixture was then coated

on a poly(ethylene terephthalate) support to achieve a dye coverage of 0.32 g/$m^2$, a gelatin coverage of 1.60 g/$m^2$, a spreading agent level of 0.096 g/$m^2$, and a hardener level of 0.016 g/$m^2$. The absorbance of the dye dispersions was measured with a spectrophotometer. Identical elements were subjected to a 5 minute distilled water wash, to Kodak E-6® Processing (which is described in British Journal of Photography Annual, 1977, pp. 194-97), and to Kodak Prostar® processing (which is used commercially to process microfilm, subjecting the elements to a development step at a pH of about 11.4 for about 30 seconds), and the absorbance was measured for each. The results are presented in Table I.

Table I

| Dye | λ-max(nm) | Bandwidth (nm) | D-max | D-max after water Wash | D-max After E-6® Processing | D-max After Prostar® Processing |
|---|---|---|---|---|---|---|
| 1 | 438 | 88 | 2.28 | 2.22 | 0.02 | — |
| 2 | 425 | 99 | 1.72 | 1.72 | 0.01 | — |
| 3 | 481 | 88 | 1.53 | 1.57 | 0.02 | — |
| 4 | 521 | 106 | 1.29 | 1.04 | 0.01 | 0.01 |
| 5 | 434 | 110 | 1.13 | 0.82 | 0.01 | 0.01 |
| 6 | 463 | 72 | 1.73 | 1.69 | 0.01 | 0.01 |
| 7 | 440 | 110 | 1.22 | 1.05 | 0.01 | 0.01 |
| 8 | 483 | 105 | 1.22 | 0.98 | 0.01 | 0.01 |
| 9 | 401 | 71 | 0.86 | 0.76 | 0.01 | 0.01 |
| 10 | 411 | 75 | 0.87 | 0.87 | 0.01 | 0.03 |

The results presented in Table I show that the dyes 1-10 according to formula (I) are not affected by the water wash, indicating no wandering at coating pH, but are fully solubilized for removal and/or decolorization by the photographic processing to which they were subjected.

## Claims

1. A dye having the formula:

(I) 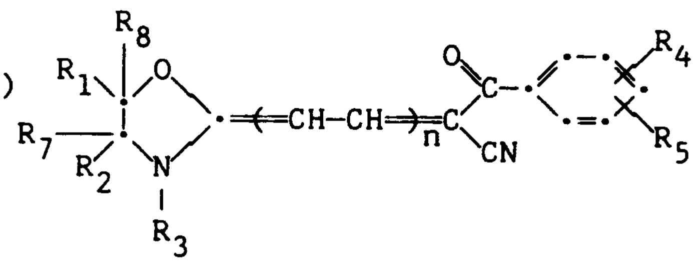 ,

wherein

$R_1$ and $R_2$ are each independently substituted or unsubstituted alkyl or substituted or unsubstituted aryl, or together represent the atoms necessary to complete a substituted or unsubstituted 5- or 6-membered ring,

$R_3$ is substituted or unsubstituted alkyl or aryl,

$R_4$ and $R_5$ each independently represents H,

substituted or unsubstituted alkyl, substituted or unsubstituted aryl, $CO_2H$, or $NHSO_2R_6$, with the proviso that at least one of $R_4$, $R_5$, or a substituent on an aryl $R_3$, on an aryl $R_1$ or $R_2$, or on an aryl ring formed by $R_1$ and $R_2$ is $CO_2H$ or $NHSO_2R_6$,

$R_6$ is substituted or unsubstituted alkyl or substituted or unsubstituted aryl,

$R_7$ is substituted or unsubstituted alkyl, or together with $R_8$ forms a double bond,

$R_8$ is H or together with $R_7$ forms a double bond, and

n is 1 or 2.

2. A dye according to Claim 1 wherein $R_1$ and $R_2$ are each independently substituted or unsubstituted alkyl of from 1 to 6 carbon atoms, or together form a phenyl ring, $R_3$ is substituted or unsubstituted alkyl of from 1 to 8 carbon atoms or substituted or unsubstituted aryl of from 6 to 14 carbon atoms, $R_4$ is H, $CO_2H$, or $NHSO_2R_6$, $R_5$ is H, $CO_2H$, or $NHSO_2R_6$, $R_6$ is substituted or unsubstituted alkyl of from 1 to 6 carbon atoms or substituted or unsubstituted aryl of from 6 to 14 carbon atoms.

3. A dye according to Claims 1-2 wherein $R_1$ and $R_2$ are each methyl or together with the carbon atoms to which they are attached, form a phenyl ring, $R_4$ is $CO_2H$, $R_5$ is H or $CO_2H$, and $R_3$ is methyl, ethyl, or benzyl.

4. A dye according to Claims 1-3 wherein at least one of $R_4$, $R_5$, or a substituent on an aryl $R_3$, on an aryl $R_1$ or $R_2$, or on an aryl ring formed by $R_1$ and $R_2$ is $CO_2H$, or at least two of $R_4$, $R_5$, or a substituent on an aryl $R_3$, on an aryl $R_1$ or $R_2$, or on an aryl ring formed by $R_1$ and $R_2$ are $NHSO_2R_6$.

5. A dye according to Claims 1-4 wherein $R_7$ is part of a double bond between the ring carbon atoms to which $R_1$ and $R_2$ are attached.

6. A dye according Claims 1-5 characterized in that the dye is in the form of a solid particle dispersion.

7. A dye according to Claim 6 in the form of a dispersion of particles having a mean diameter of from 0.01 to 10 µm.

8. A dye according to Claim 6 in the form of a dispersion of particles having a mean diameter of from 0.01 to 1.0 µm.

9. A dye according to Claims 6-7 wherein the dye particles are dispersed in a hydrophilic colloid vehicle.

10. A photographic element comprising a support having thereon a radiation-sensitive layer and a dye, located in the radiation-sensitive layer or in another layer of the element, according to Claims 1-8.

**Patentansprüche**

1. Farbstoff mit der Formel:

(I) 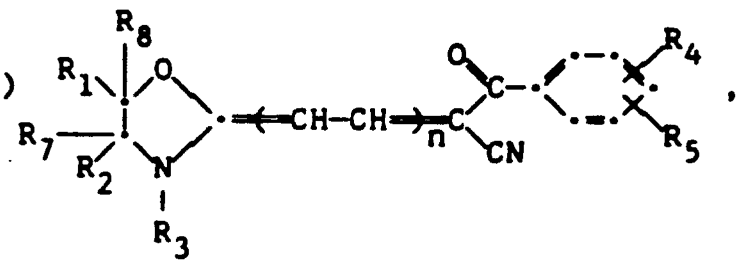

worin bedeuten
$R_1$ und $R_2$ jeweils unabhängig voneinander substituiertes oder unsubstituiertes Alkyl oder substituiertes oder unsubstituiertes Aryl, oder gemeinsam die Atome, die zur Vervollständigung eines substituierten oder unsubstituierten 5- oder 6-gliedrigen Ringes erforderlich sind,
$R_3$ substituiertes oder unsubstituiertes Alkyl oder Aryl,
$R_4$ und $R_5$ jeweils unabhängig voneinander H, substituiertes oder unsubstituiertes Alkyl, substituiertes oder unsubstituiertes Aryl, $-CO_2H$, oder $-NHSO_2R_6$, wobei gilt, daß mindestens einer der Substituenten $R_4$, $R_5$ oder ein Substituent an einem Aryl $R_3$, an einem Aryl $R_1$ oder $R_2$ oder einem Arylring, der durch $R_1$ und $R_2$ gebildet wird, die Bedeutung hat von $-CO_2H$ oder $-NHSO_2R_6$,
$R_6$ substituiertes oder unsubstituiertes Alkyl oder substituiertes oder unsubstituiertes Aryl,
$R_7$ substituiertes oder unsubstituiertes Alkyl, oder gemeinsam mit $R_8$ eine Doppelbindung,
$R_8$ gleich H oder gemeinsam mit $R_7$ eine Doppelbindung und
n gleich 1 oder 2.

2. Farbstoff nach Anspruch 1, worin $R_1$ und $R_2$ jeweils unabhängig voneinander stehen für substituiertes oder unsubstituiertes Alkyl mit 1 bis 6 Kohlenstoffatomen oder worin $R_1$ und $R_2$ gemeinsam einen Phenylring bilden, worin $R_3$ substituiertes oder unsubstituiertes Alkyl mit 1 bis 8 Kohlenstoffatomen oder substituiertes oder unsubstituiertes Aryl mit 6 bis 14 Kohlenstoffatomen ist, $R_4$ für H, $-CO_2H$, oder-$NHSO_2R_6$ steht, $R_5$ die Bedeutung von H, $-CO_2H$, oder $-NHSO_2R_6$ hat und $R_6$ steht für substituiertes oder unsubstituiertes Alkyl mit 1 bis 6 Kohlenstoffatomen oder substituiertes oder unsubstituiertes Aryl mit 6 bis 14 Kohlenstoffatomen.

3. Farbstoff nach Ansprüchen 1 bis 2, worin $R_1$ und $R_2$ jeweils stehen für Methyl oder worin $R_1$ und $R_2$ mit den Kohlenstoffatomen, an die sie gebunden sind, einen Phenylring bilden, worin $R_4$ für $-CO_2H$ steht, $R_5$ für H oder $-CO_2H$ und $R_3$ für Methyl, Ethyl oder Benzyl.

4. Farbstoff nach Ansprüchen 1 bis 3, worin mindestens einer der Substituenten $R_4$, $R_5$ oder ein Substituent an einem Aryl $R_3$, an einem Aryl $R_1$ oder $R_2$ oder an einem Arylring, gebildet durch $R_1$ und $R_2$ die Bedeutung von $-CO_2H$ hat oder worin mindestens zwei der Substituenten $R_4$, $R_5$ oder ein Substituent an einem Aryl $R_3$, an einem Aryl $R_1$ oder $R_2$ oder an einem Arylring, gebildet durch $R_1$ und $R_2$ die Bedeutung von $-NHSO_2R_6$ haben.

5. Farbstoff nach Ansprüchen 1 bis 4, worin $R_7$ Teil einer Doppelbindung zwischen den Ringkohlenstoffatomen ist, an die $R_1$ und $R_2$ gebunden sind.

6. Farbstoff nach Ansprüchen 1 bis 5, dadurch gekennzeichnet, daß der Farbstoff in Form einer Festpartikel-Dispersion vorliegt.

7. Farbstoff nach Anspruch 6 in Form einer Dispersion von Partikeln mit einem mittleren Durchmesser von 0,01 bis 10 $\mu$m.

8. Farbstoff nach Anspruch 6 in Form einer Dispersion von Partikeln mit einem mittleren Durchmesser von 0,01 bis 1,0 µm.

9. Farbstoff nach Ansprüchen 6 bis 7, worin die Farbstoffpartikel in einem hydrophilen kolloidalen Bindemittel dispergiert sind.

10. Photographisches Element mit einem Träger, auf dem sich eine strahlungsempfindliche Schicht sowie ein Farbstoff in der strahlungsempfindlichen Schicht oder in einer anderen Schicht des Elementes, nach Ansprüchen 1 bis 8, befinden.

**Revendications**

1. Colorant de formule :

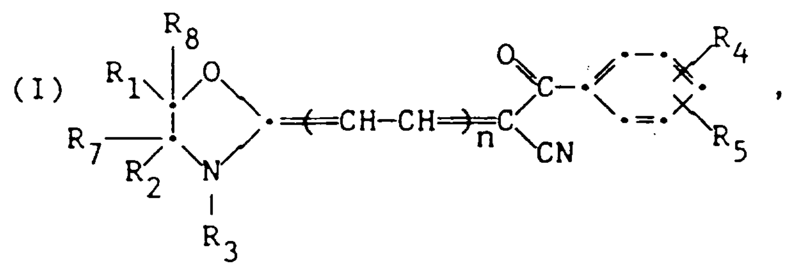

où $R^1$ et $R^2$ sont chacun séparément un groupe alkyle ou aryle substitué ou non, ou ensemble représentent les atomes nécessaires pour compléter un cycle à 5 ou 6 chaînons substitué ou non ;

$R^3$ représente un alkyle ou aryle substitué ou non ;

$R^4$ et $R^5$ chacun séparément représente H, un groupe alkyle ou aryle substitué ou non, $CO_2H$, ou $NHSO_2R^6$,avec la condition qu'au moins $R^4$, $R^5$, ou un substituant sur un aryle $R^3$, sur un aryle $R^1$ ou $R^2$, ou sur un cycle aryle formé par $R^1$ et $R^2$ soit $CO_2H$ ou $NHSO_2R^6$,

$R^6$ est un groupe alkyle ou aryle substitué ou non,

$R^7$ est un groupe alkyle ou aryle substitué ou non, ou avec $R^8$ forme une double liaison,

$R^8$ est H ou ensemble avec $R^7$ forme une double liaison, et

m est 1 ou 5.

2. Colorant selon la revendication 1 où $R^1$ et $R^2$ sont chacun séparément un alkyle substitué ou non de 1 à 6 atomes de carbone, ou ensemble forment un cycle phényle, $R^3$ est un alkyle substitué ou non de 1 à 8 atomes de carbone ou un aryle substitué ou non de 6 à 14 atomes de carbone, $R^4$ est H, $CO_2H$, ou $NHSO_2R^6$, $R^5$ est H, $CO_2H$, ou $NHSO_2R^6$, $R^6$ un alkyle substitué ou non de 1 à 6 atomes de carbone ou un aryle substitué ou non de 6 à 14 atomes de carbone.

3. Colorant selon la revendication 1 ou 2 où $R^1$ et $R^2$ sont chacun méthyle ou ensemble avec les atomes de carbone auxquels ils sont rattachés forment un cycle phényle, $R^4$ est $CO_2H$, $R^5$ est H ou $CO_2H$ et $R^3$ est méthyle, éthyle ou benzyle.

4. Colorant selon les revendications 1 à 3 où au moins un des $R^4$, $R^5$, ou un substituant sur un aryle $R^3$, ou sur un aryle $R^1$ ou $R^2$, ou sur un cycle aryle formé par $R^1$ et $R^2$ est $CO_2H$, ou au moins deux des $R^4$, $R^5$, ou un substituant sur un aryle $R^3$, ou sur un aryle $R^1$ ou $R^2$, ou sur un cycle aryle formé par $R^1$ et $R^2$ est $NHSO_2R^6$.

5. Colorant selon les revendications 1 à 4 où $R^7$ fait partie de la double liaison entre les atomes de carbone du cycle auxquels $R^1$ et $R^2$ sont rattachés.

6. Colorant selon les revendications 1 à 5 où le colorant est sous forme de dispersion de particules solides.

7. Colorant selon la revendication 6 sous forme d'une dispersion de particules ayant un diamètre moyen compris entre 0,01 et 10 µm.

**8.** Colorant selon la revendication 6 sous forme de dispersion de particules ayant un diamètre moyen compris entre 0,01 et 1,0 µm.

**9.** Colorant selon la revendication 6 ou 7 où les particules de colorant sont dispersées dans un liant colloïde hydrophile.

**10.** Elément photographique comprenant un support recouvert d'une couche sensible au rayonnement et un colorant placé dans la couche sensible au rayonnement ou dans une autre couche de l'élément, selon les revendications 1 à 8.